(19) Europäisches Patentamt
European Patent Office
Office européen des brevets

(11) **EP 2 572 470 B1**

(12) **FASCICULE DE BREVET EUROPEEN**

(45) Date de publication et mention de la délivrance du brevet:
**09.11.2016 Bulletin 2016/45**

(21) Numéro de dépôt: **11719826.7**

(22) Date de dépôt: **16.05.2011**

(51) Int Cl.:
**H04L 9/08** (2006.01)

(86) Numéro de dépôt international:
**PCT/EP2011/057842**

(87) Numéro de publication internationale:
**WO 2011/144554 (24.11.2011 Gazette 2011/47)**

(54) **PROCÉDÉ D'OBTENTION DE CLÉS DE CHIFFREMENT, TERMINAL, SERVEUR, ET PRODUITS PROGRAMMES D'ORDINATEURS CORRESUPONDANTS.**

VERFAHREN FÜR DEN ERHALTUNG VON VERSCHLÜSSELUNGSSCHLÜSSELN, ZUGEHÖRIGES ENDGERÄT, SERVER UND COMPUTERPROGRAMMPRODUKTE

METHOD OF OBTAINING ENCRYPTION KEYS, CORRESPONDING TERMINAL, SERVER, AND COMPUTER PROGRAM PRODUCTS.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2010 FR 1054217**
**20.05.2010 FR 1053945**

(43) Date de publication de la demande:
**27.03.2013 Bulletin 2013/13**

(73) Titulaire: **Ingenico Group**
**75015 Paris (FR)**

(72) Inventeurs:
• **BRIER, Eric**
**F-07130 Saint-peray (FR)**

• **PEYRIN, Thomas**
**F-75014 Paris (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**WO-A1-2010/053885    US-A1- 2008 049 940**

• **WIKIPEDIA: "Derived unique key per transaction", INTERNET CITATION, 7 septembre 2009 (2009-09-07), pages 1-5, XP007918284, Extrait de l'Internet: URL:http://en.wikipedia.org/w/index.php?ti tle=Derived_unique_key_per_transaction&old id=312404635 [extrait le 2011-04-13]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**1 DOMAINE DE L'INVENTION**

La présente invention se rapporte au domaine de la sécurisation d'échanges de données entre deux dispositifs.
La présente invention se rapporte plus particulièrement à la sécurisation à l'aide de clés cryptographiques qui autorisent un chiffrement des données échangées. Les données échangées peuvent par exemple être des données d'authentification d'un utilisateur tel qu'un identifiant, un mot de passe ou encore un code confidentiel.

**2 SOLUTIONS DE L'ART ANTERIEUR**

Dans un contexte de chiffrement de code confidentiel ou de chiffrement des données se rapportant à un porteur de carte (numéro d'accès personnel, date d'expiration, etc.), L'« *American National Standards Institute »* (ANSI) requiert l'utilisation d'un schéma de gestion de clés cryptographiques conforme au standard ANSI X9.24. Ce document propose trois méthodes possibles pour le chiffrement, dont la méthode « Derive Unique Key Per Transaction » (DUKPT, littéralement en français «Dérivé de clé unique par transaction»). Cette méthode est unanimement reconnue comme étant la plus poussée en terme de sécurité.
Cette technique de gestion de clés cryptographiques DUKPT est de plus en plus mises en oeuvre et s'impose naturellement comme étant la norme pour chiffrer des données se rapportant à un porteur de carte (code confidentiel, numéro d'accès personnel, date d'expiration, etc.).
Selon cette technique DUKPT, à chaque transaction, une nouvelle clé est dérivée dans un terminal pour chiffrer les données sensibles, données qui seront envoyées en même temps qu'un compteur permettant ensuite au serveur de retrouver la clé utilisée par le terminal (bien entendu, on considère qu'un secret est partagé entre le terminal et le serveur une fois le système initialisé).
Pour plus de précisions à propos de la technique DUKPT, on pourra se référer au document ANSI X9.24.
Cette méthode présente deux avantages en termes de sécurité. Premièrement, toutes les clés cryptographiques dérivées seront différentes pour chaque transaction. Cela permet de grandement limiter les attaques physiques sur les clés de transaction puisque chacune d'elles ne sera utilisée qu'une seule et unique fois. De plus, DUKPT est « forward secure » : à tout instant, si une partie ou l'intégrité de l'information secrète contenue dans le terminal est compromise, l'attaquant ne pourra pas retrouver les clés cryptographiques utilisées pour les transactions précédentes. Cela permet de grandement limiter l'impact qu'aurait toute compromission d'un terminal (de paiement par exemple).
La technique DUKPT souffre cependant de quelques inconvénients qui ralentissent sa généralisation.
De manière pratique, le schéma DUKPT décrit dans le document ANSI X9.24 permet d'engendrer légèrement plus d'un million de clés (et donc de gérer autant de transactions). Ces avantages en termes de sécurité entraînent des inconvénients. Tout d'abord, un terminal qui implémente DUKPT doit réserver en mémoire sécurisée *vingt et un* registres de clés durant tout le cycle de vie de DUKPT. Ces registres sont utilisés pour calculer les clés dérivées. La mémoire sécurisé est assez limitée en pratique et cette limitation devient très rapidement problématique lorsque l'on souhaite utiliser plusieurs DUKPT sur un même terminal (ce qui est souvent le cas). Un registre est un emplacement spécifique de la mémoire dédié à un usage particulier, dans le cadre de la présente divulgation.
De plus, au niveau du serveur, une fois le compteur reçu de la part du terminal, un certain nombre de calculs sont nécessaires pour permettre au serveur de dériver la clé utilisée par le terminal. DUKPT garanti que la clé est dérivée au maximum au bout de *dix* itérations. Il faut noter que ces calculs sont relativement longs, et représentent une partie prépondérante dans la charge processeur du serveur. En d'autres termes, la technique DUKPT :

- requiert beaucoup de mémoire sécurisée dans le terminal ;
- requiert beaucoup de calculs au niveau du serveur de déchiffrement ;
- est une solution complexe à implanter et n'est pas modulable.

Ainsi, pour promouvoir la solution proposée par DUKPT, il existe donc un besoin de fournir une technique de dérivation de clés qui résolvent les inconvénients préalablement décrits.

**3 RESUME DE L'INVENTION**

L'invention ne comprend pas ces inconvénients de l'art antérieur. En effet, l'invention se rapporte à un Procédé d'obtention d'au moins une clé de chiffrement d'au moins une données transmise d'un client vers un serveur caractérisé en ce qu'il comprend :

- une étape de détermination d'un nombre R de registres disponibles au sein dudit client pour réaliser une pluralité de calcul de clés de chiffrement ;
- une étape de détermination d'un nombre $N$ maximal d'itérations nécessaires à une obtention d'au moins une clé de chiffrement auprès dudit serveur ;
- une étape d'obtention d'une structure de données représentatives d'un état de calcul de clé réalisé au sein desdits $R$ registres disponibles ;
- une étape calcul de ladite au moins une clé de chiffrement en fonction :

- dudit nombre de registres disponibles $R$ dudit client,
- en effectuant au plus $N$ appels à une fonction pseudo-aléatoire $F$ et
- de ladite structure de données ;

de sorte que ladite au moins une clé de chiffrement puisse être obtenue parmi une combinaison d'au plus $T = C_{R+N}^{N} - 1$ de clés de chiffrement à partir d'un secret préalablement partagé entre ledit serveur et ledit client.

Ainsi, en fonction de contraintes, on détermine les paramètres R, N et T afin de déterminer des clés de chiffrement qui correspondent à des situations différentes. En effet, cette technique peut s'adapter entièrement à une situation précise (tandis que le DUKPT est complètement figé dans ses paramètres à cause de sa complexité). Ainsi, il est aisé, grâce à l'invention, de gérer avec la même implantation logicielle et matérielle deux situations opposées et s'adapter en conséquence pour maximiser les performances.

Selon un mode de réalisation particulier, le nombre R de registres disponibles et le nombre N maximal d'itération sont définis en fonction des contraintes du serveur et des contraintes du client et des contraintes sécuritaires.

Ainsi, il est possible d'établir, pour un nombre de clés que l'on va pouvoir générer constant T (appelé « niveau de sécurité T »), un compromis entre la charge du serveur, dont on déduit le paramètre N et les capacités du client, notamment en terme de capacité de mémoire sécurisée, représentée par le paramètre R, définissant le nombre de registres disponibles au sein du client. Il est également possible de faire varier le niveau de sécurité T pour déterminer un compromis entre le niveau de sécurité T et les paramètres du client et/ou du serveur.

Les étapes de déterminations consiste à établir (obtenir) un consensus sur le choix des valeurs des paramètres N, R, T entre le serveur et le client.

L'étape d'établissement des paramètres N, R, T peut être dynamique : le serveur et le client s'échangent des informations pour modifier au moins un des paramètres N, R, T soit :

- une unique fois lors de l'établissement de la communication entre le serveur et le client : avant la première transaction (ou la première communication entre le client et le serveur), le client et le serveur se mettent d'accord sur le choix des paramètres N, R, T
- « au cours de la vie » du client, on change de secret partagé initial et on réinitialise les paramètres N, R, T : en effet, la clé IK dans le client ayant été effacée, une nouvelle clé IK est déterminée entre le serveur et le client (en fonction des clés présentes dans les registres du clients ou en fonction d'une nouvelle clé échangée entre le client et le serveur).

L'étape d'établissement des paramètres N, R, T peut être statique : il s'agit du cas où tout est fixé au préalable comme dans la technique DUPKT usuelle.

Enfin, les contraintes sécuritaires porte sur le nombre de clés que l'on peut dériver.

Selon un mode de réalisation particulier, ledit procédé comprend en outre, lorsqu'il est mis en oeuvre au sein dudit client, une étape d'émission d'une donnée représentant ladite structure de données représentatives d'un état de calcul de clé réalisé au sein desdits $R$ registres disponibles, registres notés $R_R,...R_1$.

La donnée correspondant à ladite structure de données représentatives d'un état de calcul de clé réalisé au sein desdits R registres disponibles est soit un compteur correspondant au numéro de la transaction en cours ou à ladite structure de données an tant que telle.

Selon une caractéristique particulière, caractérisé en ce que ladite structure de données représentatives d'un état de calcul de clé réalisé au sein desdits $R$ registres disponibles est une concaténation de $R$ nombres entiers, $st = D = D_R ...D_1$ chaque entier $D_i$ représentant une distance entre ledit secret préalablement partagé entre ledit serveur et ledit client, et une clé stockée dans un registre $R_i$ dudit client, ladite distance correspondant à un nombre d'itération de ladite fonction pseudo-aléatoire $F$.

Selon un mode de réalisation particulier, ledit procédé comprend :

- une étape de détermination, en partant du registre $R_1$ jusqu'au maximum au registre $R_R$, d'une position $p$ du plus petit registre $R_p$, pour lequel une distance associée $D_p$ est strictement plus petite que le nombre $N+1$, ledit registre

$R_p$ comprenant une clé de chiffrement $K$, utilisée pour une transaction donnée ;

- une étape de mise à jour de ladite structure de données comprenant :

lorsque $D_p < N$ :

o une étape de mise à jour des $p$ registres $R_p$ ...$R_1$ de en calculant à partir de ladite clé de registre K, de ladite fonction pseudo aléatoire F, de ladite structure de données D et d'un nombre entier i, tel que $R_i = F(K, D, i)$ pour $1 <= i <= p$ ;
o une étape de mise à jour ladite structure de données de sorte que $D_i = D_p + 1$ avec $1 <= i <= p$ ;

lorsque $D_p = N$, une étape d'effacement du contenu dudit registre $R_p$ et une étape de mise à jour du nombre $D_p = D_p + 1 = N + 1$.

Selon un mode de réalisation particulier, lorsqu'il est mis en oeuvre au sein dudit serveur, ladite étape d'obtention comprend :

- une étape de réception d'une donnée représentant ladite structure de données représentatives d'un état de calcul de clé réalisé au sein desdits $R$ registres disponibles ;
- une étape de lecture de ladite donnée reçue délivrant ladite structure de données représentatives ;
- une étape de calcul de ladite structure de données représentatives d'un état de calcul de clé réalisé au sein desdits $R$ registres disponibles lorsque ladite structure de données représentatives n'est pas directement lue dans ladite donnée reçue.

Selon un mode de réalisation particulier, ladite structure de données est définie comme étant une concaténation de $R$ nombres entiers: $st = D = D_R ... D_1$ où chaque nombre entier $D_i$ représente une distance entre ledit secret préalablement partagé entre ledit serveur et ledit client, et une clé stockée dans un registre $R_i$ dudit client, et en ce que l'étape de calcul de ladite au moins une clé de chiffrement comprend:

- une étape d'initialisation d'une distance locale $d$ à $1$ et une position de registre $p$ telle que $p = p'$, avec $p'$ un nombre correspondant à la position de poids fort, en partant du registre $R_R$ jusqu'au registre $R_1$, tel que $D_{p'} > 1$ ;
- une première étape de calcul pour obtenir une clé $K = F(secret\ préalablement\ partagé,\ 0^R,\ p')$ où $0^R$ correspond à $R$ fois $0$,
- et au moins une itération :

• d'une calcul pour obtenir une clé $K = F(K, g_{p,d}(D), p)$ où $g_{p,v}(D) = D'_R ... D'_1$ pour laquelle $D'_i = N+1$ si $i$ est compris entre $1$ et $p-1$, $D'_i = d$ si $i=p$ et $D'_i = D_i$ si i est compris entre $p+1$ et $R$ et d'une étape pour mettre à jour la variable d tel que $d = d+1$ tant que la condition suivante est vérifiée : $d < D_p - 1$;
• si le nombre p = 1, une étape de calcul consistant à obtenir une clé $K = F(K, g_{p,i}(D), p)$ correspondant alors à la clé partagée temporairement avec le client et arrêter l'itération des étapes;
• déterminer une position $p'$ telle que $D_{p'} > D_p$ ;
• Si $D_{p'} \neq N+1$, une étape consistant à calculer une clé $K = F(K, g_{p,d}(D), p')$ et une étape de mise à jour des variables $p = p'$ et $d=d+1$.
• Sinon, effectuer une étape consistant à calculer une clé $K = F(K, g_{p,d}(D), p'+1)$ correspondant alors à la clé partagée temporairement avec le client et arrêter l'itération d'étapes.

Selon un autre aspect, l'invention concerne un dispositif d'obtention d'au moins une clé de chiffrement d'au moins une donnée transmise d'un client vers un serveur. Selon l'invention, un tel dispositif comprend :

- des moyens de détermination d'un nombre $R$ de registres disponibles au sein dudit client pour réaliser une pluralité de calcul de clés de chiffrement ;
- des moyens de détermination d'un nombre $N$ maximal d'itérations nécessaires à une obtention d'au moins une clé de chiffrement auprès dudit serveur ;
- des moyens d'obtention d'une structure de données représentatives d'un état de calcul de clé réalisé au sein desdits $R$ registres disponibles ;
- des moyens de calcul de ladite au moins une clé de chiffrement en fonction :

- dudit nombre de registres disponibles $R$ dudit client,
- en effectuant au plus $N$ appels à une fonction pseudo-aléatoire $F$ et

- de ladite structure de données ;

de sorte que ladite au moins une clé de chiffrement puisse être obtenue parmi une combinaison $T = C_{R+N}^{N} - 1$ de clés de chiffrement à partir d'un secret préalablement partagé entre ledit serveur et ledit client.

Selon un autre aspect, l'invention concerne un produit programme d'ordinateur téléchargeable depuis un réseau de communication et/ou stocké sur un support lisible par ordinateur et/ou exécutable par un microprocesseur. Selon l'invention, un tel programme comprend des instructions de code de programme pour l'exécution du procédé d'obtention tel que décrit précédemment.

Selon un autre aspect, l'invention comprend également un signal d'obtention d'au moins une clé de chiffrement d'au moins une données transmise d'un client vers un serveur. Selon l'invention, un tel signal comprend une structure de données représentatives d'un état de calcul de clé de chiffrement réalisé au sein dudit client, un contenu de ladite structure étant fonction d'un nombre *R* de registres disponibles au sein dudit client pour réaliser une pluralité de calcul de clés de chiffrement et d'un nombre *N* maximal d'itérations nécessaires à une obtention d'au moins une clé de chiffrement auprès dudit serveur, de sorte que ladite au moins une clé de chiffrement puisse être obtenue parmi une combinaison d'au plus $T = C_{R+N}^{'N} - 1$ de clés de chiffrement à partir d'un secret préalablement partagé entre ledit serveur et ledit client.

## 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique de la technique de l'invention ;
- la figure 2 illustre la technique de l'invention au niveau d'un client ;
- la figure 3 illustre la technique de l'invention au niveau d'un serveur ;
- la figure 4 illustre la structure d'un client ;
- la figure 5 illustre la structure d'un serveur.

## 5 DESCRIPTION DETAILLEE DE L'INVENTION

### 5.1 Rappel du principe de l'invention

L'invention propose une nouvelle méthode de mise en oeuvre du DUKPT, méthode dans laquelle l'information transmise du terminal au serveur permet de réduire d'une part la quantité de mémoire sécurisée utilisée au niveau du terminal et d'autre part réduire, au niveau du serveur, le nombre d'itérations nécessaires à la découverte de la clé générée par le terminal. La méthode de l'invention permet donc :

- de diminuer la quantité de mémoire sécurisée à utiliser dans le terminal ;
- de réduire le nombre de calculs au niveau du serveur de déchiffrement.

De manière complémentaire et inattendue, les inventeurs ont également constaté que la méthode proposée augmente le niveau de sécurité de DUKPT. En effet, lorsque la méthode proposée est mise en oeuvre sur un terminal qui comprend une mémoire sécurisée suffisante et un serveur dédié qui effectue les calcul de manière rapide, il est possible de calculer non pas un million de clé (comme cela est la cas avec DUKPT en utilisant vingt et un registres et dix itérations), mais quarante millions, toujours en utilisant vingt et un registres et dix itérations.

Ainsi, on décrit, dans la présente demande une nouvelle technique améliorant l'algorithme DUKPT original. Les garanties de sécurité sont exactement les mêmes, à savoir une clé unique par transaction ainsi que le fait qu'une clé soit compromise en compromet pas les clés précédentes et suivantes (« forward security » en anglais). Par contre, les performances et la mémoire requise sont améliorées.

Pour exemple, l'utilisation classique consiste à pouvoir engendrer au moins un million de clés avec une garantie que chaque clé de transaction sera dérivée dans le serveur avec au maximum *dix* itérations. Dans cette situation, la méthode de l'invention permet de n'utiliser que *treize* registres au niveau du terminal au lieu des *vingt et un* registres requis pour DUKPT. Ce type d'amélioration facilite l'implantation de ce type de gestion de clés cryptographiques.

De plus, il est primordial de noter que la technique de l'invention est plus simple que DUKPT et surtout modulable.

En effet, la technique de l'invention peut s'adapter entièrement à une situation précise (tandis que le DUKPT tel qu'il est actuellement proposé est complètement figé dans ses paramètres à cause de sa complexité). Ainsi, il est très aisé, avec la technique de l'invention, de pouvoir gérer avec la même configuration deux situations diamétralement opposées et s'adapter en conséquence pour maximiser les performances. Cette modularité s'opère à l'aide de *trois* paramètres :

- le nombre de registres $R$ disponible dans le terminal ;
- le nombre maximal d'itérations $N$ dans le serveur pour retrouver la clé ;
- le nombre total de clés distinctes $T$ pouvant être engendrées.

Ainsi, pour un niveau de sécurisation donné (par exemple *T est supérieur ou égal à 1 million*), il est possible avec la technique de l'invention, de faire varier à la fois $R$ et $N$ en fonction de la situation du terminal (le nombre de registres $R$ dont il dispose) et du serveur (le nombre d'itérations $N$ qu'il peut accepter en fonction de sa charge). Ainsi, pour un premier terminal, $R$ peut par exemple être égal à *13* et $N$ égal à *10* au niveau du serveur, tandis que pour un deuxième terminal, $R$ peut par exemple être égal à *14 et N égal à 9* au niveau du serveur. Le niveau de sécurité (par exemple le nombre *T est supérieur ou égal à 1 million*) est le même.

Cette modularité, telle qu'elle est présentée, n'est pas possible avec la technique antérieure. Cette modularité est possible, selon l'invention, en mettant en oeuvre deux méthodes : l'une sur le terminal (le client), l'autre sur le serveur. L'exécution de ces méthodes et la transmission de données réalisée par le terminal au serveur permettent de résoudre le problème d'absence de modularité des techniques antérieures et par voie de conséquence les problèmes de taille de mémoire et les problèmes de charge des serveurs.

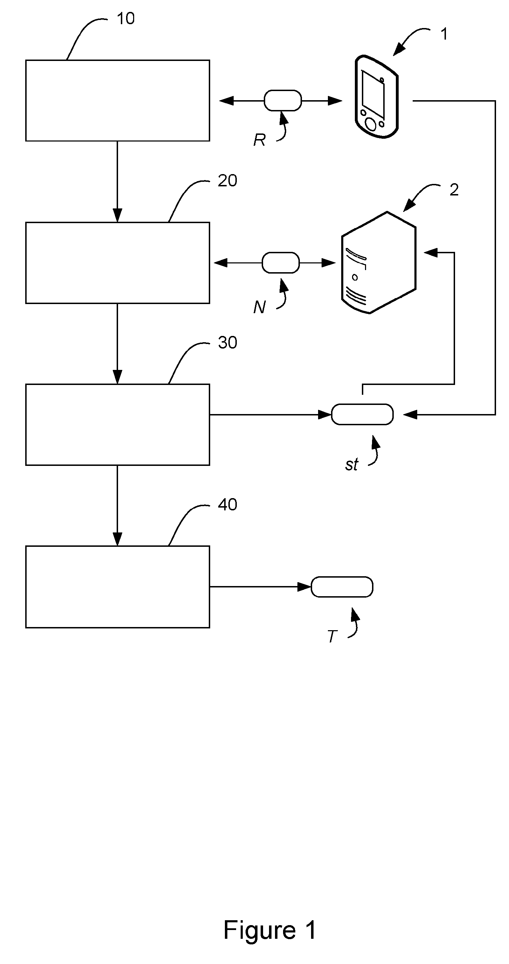

On présente, en relation avec la figure 1, le principe général de l'invention tel qu'il est mis en oeuvre à la fois du côté client et du côté serveur. Des disparités existent entre le client et le serveur. Elles seront décrites par la suite. Le procédé de l'invention comprend, dans son interprétation la plus large :

- une étape de détermination (10) d'un nombre $R$ de registres disponibles au sein dudit client (1) pour réaliser une pluralité de calcul de clés de chiffrement ;
- une étape de détermination (20) d'un nombre $N$ maximal d'itérations nécessaires à une obtention d'au moins une clé de chiffrement auprès dudit serveur (2) ;
- une étape d'obtention (30) d'une structure de données *(st)* représentatives d'un état de calcul de clés réalisé au sein desdits $R$ registres disponibles ;
- une étape calcul (40) de ladite au moins une clé de chiffrement ($K$) en fonction :

    o dudit nombre de registres disponibles $R$ dudit client,
    o en effectuant au plus $N$ appels à une fonction pseudo-aléatoire $F$ *et*
    o de ladite structure de données ;

de sorte que ladite au moins une clé de chiffrement puisse être obtenue parmi une combinaison $T = C_{R+N}^{N} - 1$ de clés de chiffrement à partir d'un secret préalablement partagé entre ledit serveur et ledit client.

La combinaison $T = C_{R+N}^{N} - 1$ est également notée $T = \begin{pmatrix} R+N \\ N \end{pmatrix} - 1$ dans certains passages du document.

**En d'autres termes :**

Soit *IK* une clé originellement partagée entre le terminal et le serveur. On suppose que cette clé est composée de $k$ bits et l'on souhaite que les clés de transaction soient de la même taille. Soit *F*: $\{0,1\}^* \to \{0,1\}^k$ une fonction pseudo-aléatoire . On note II l'opération de concaténation.

COTE TERMINAL

Le terminal est tout d'abord initialisé en remplissant ses $R$ registres comme suit : pour le *j-ième* registre *Rj*, la valeur contenue dans ce registre est *Rj = F(IK ∥ j)*. Parallèlement, pour faciliter la compréhension, on maintient à jour un tableau *Tbl* de $R$ compteurs locaux, tous initialisés à un. Le compteur situé dans la case *j* du tableau *Tbl* correspond au nombre d'itérations nécessaires à partir de la clé d'origine *IK* pour obtenir la clé de transaction stockées dans le registre *Rj*. Bien entendu, on s'assure qu'aucun de ces compteurs ne dépasse la valeur *N,* puisque ce nombre représente le maximum d'itérations du côté du serveur. Enfin, un compteur de transaction *CT* est initialisé à zéro.

A chaque transaction (par exemple bancaire), le compteur de transaction *CT* est incrémenté de 1. La clé de transaction (utilisée pour cette transaction) est la clé située dans le registre de poids le plus faible et dont le compteur local *j* correspondant est inférieur ou égal à *N*. On note ce registre de poids le plus faible *Rk* et la clé de transaction correspondante *K*. La valeur stockée dans le compteur local *j* correspondant à *Rk* est notée *C*. Une fois la clé *K* utilisée (pour la transaction), les registres et les compteurs locaux sont mis à jour :

- si *C < N,* tous les registres *Ri* de poids inférieur ou égal à *k* (c'est-à-dire $i \leq k$) reçoivent la valeur *Ri = F( K // k // i )* tandis que les compteurs correspondant sont modifiés à *C + 1* (ils sont augmentés de la valeur 1) ;
- si *C = N,* on efface *K* du registre *Rk* et on incrémente le compteur local correspondant (qui passe donc à *N+1).*

Les données de transaction sont alors chiffrées par le terminal avec cette clé de transaction *K* pour être transmises au serveur.

## COTE SERVEUR

Lorsque la clé de transaction *K* est obtenue par le terminal (la méthode d'obtention préalablement décrite permet d'obtenir cette clé), les données sensibles de la transaction sont chiffrées avec cette clé de transaction *K* et transmises au serveur avec le compteur de transaction *CT.* Le serveur réceptionne le compteur *CT* et en déduit le cheminement de dérivation de clé à partir de *IK.* Une fois la clé de transaction *K* obtenue, il peut déchiffrer les données chiffrées par le terminal.

On note que toutes les clés de transactions seront bien distinctes. De plus, la méthode est bien « forward secure » puisque la compromission des *R* registres du terminal ne permet pas de retrouver de l'information sur les clés utilisées lors des précédentes transactions. Comme pour la technique DUKPT, ceci est du au fait que la fonction *F* est non inversible.

En terme de performances, la méthode de l'invention garantit bien un maximum de *N* itérations dans le serveur pour *R* registres stockés dans le terminal. Le nombre de clés *T* pouvant être engendrées est une fonction de *R* et de *N :*

$$T = \sum_{i=1}^{N} \sum_{j=1}^{R} a(i, j)$$

avec *a(i, 1) = 1* pour tout *i, a(1, j) = 1* pour tout *j,* et

$$a(n, r) = \sum_{i=1}^{r} a(n-1, i)$$

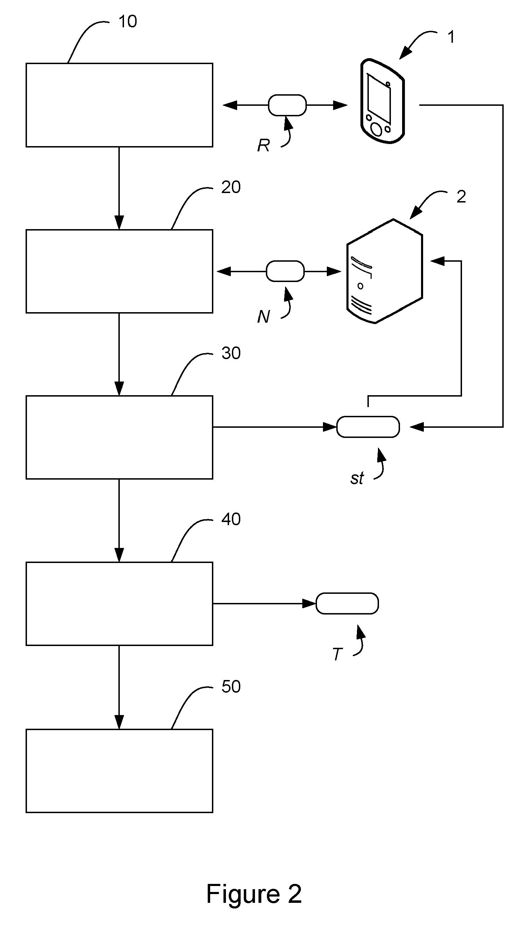

On présente, en relation avec la figure 2, un mode de réalisation de l'invention mis en oeuvre au sein du client. Le procédé de l'invention, mis en oeuvre au sein d'un client, comprend :

- une étape de détermination (10) d'un nombre *R* de registres disponibles au sein dudit client (1) pour réaliser une pluralité de calcul de clés de chiffrement ;
- une étape de détermination (20) d'un nombre *N* maximal d'itérations nécessaires à une obtention d'au moins une clé de chiffrement auprès dudit serveur (2) ;
- une étape d'obtention (30) d'une structure de données *(st)* représentatives d'un état de calcul de clés réalisé au sein desdits *R* registres disponibles ;
- une étape calcul (40) de ladite au moins une clé de chiffrement (*K*) en fonction :

  o dudit nombre de registres disponibles *R* dudit client,
  o en effectuant au plus *N* appels à une fonction pseudo-aléatoire *F et*
  o de ladite structure de données ;

de sorte que ladite au moins une clé de chiffrement puisse être obtenue parmi une combinaison $T = C_{R+N}^{'N} - 1$ de clés de chiffrement à partir d'un secret préalablement partagé entre ledit serveur et ledit client ;
- une étape d'émission (50) d'une donnée représentant ladite structure de données représentatives (st) d'un état de calcul de clé réalisé au sein desdits *R* registres disponibles, registres notés $R_R,...R_1$.

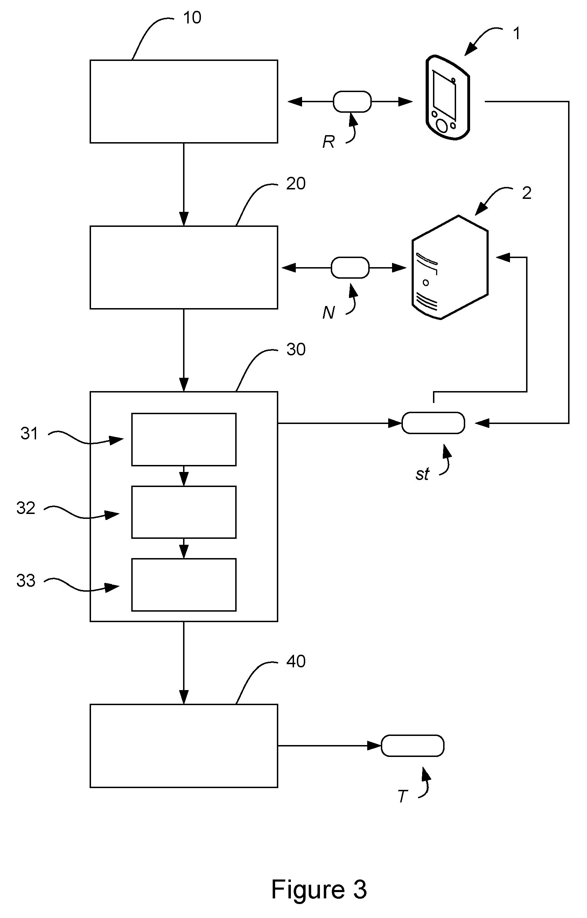

On présente, en relation avec la figure 3, un mode de réalisation de l'invention mis en oeuvre au sein du serveur. Le procédé de l'invention, mis en oeuvre au sein d'un serveur, comprend :

- une étape de détermination (10) d'un nombre *R* de registres disponibles au sein dudit client (1) pour réaliser une pluralité de calcul de clés de chiffrement ;
- une étape de détermination (20) d'un nombre *N* maximal d'itérations nécessaires à une obtention d'au moins une clé de chiffrement auprès dudit serveur (2) ;
- une étape d'obtention (30) d'une structure de données *(st)* représentatives d'un état de calcul de clés réalisé au sein desdits *R* registres disponibles ;
- une étape calcul (40) de ladite au moins une clé de chiffrement (*K*) en fonction :

    o dudit nombre de registres disponibles *R* dudit client,
    o en effectuant au plus *N* appels à une fonction pseudo-aléatoire *F et*
    o de ladite structure de données ;

de sorte que ladite au moins une clé de chiffrement puisse être obtenue parmi une combinaison $T = C_{R+N}^{N} - 1$ de clés de chiffrement à partir d'un secret préalablement partagé entre ledit serveur et ledit client ;

Dans un mode de réalisation de l'invention, l'étape d'obtention (30) comprend :

- une étape de réception (31) d'une donnée représentant ladite structure de données représentatives d'un état de calcul de clé réalisé au sein desdits *R* registres disponibles ;
- une étape de lecture (32) de ladite donnée reçue délivrant ladite structure de données représentatives ;
- une étape de calcul (33) de ladite structure de données représentatives d'un état de calcul de clé réalisé au sein desdits *R* registres disponibles lorsque ladite structure de données représentatives n'est pas directement lue dans ladite donnée reçue.

Ainsi, il convient de remarquer que l'étape de calcul (33) n'est pas toujours nécessaire. En fonction de la donnée reçue envoyée par le client, le serveur voit sa charge de calcul et/ou stockage plus ou moins alourdie.

Par la suite, on présente notamment le cas d'une mise en oeuvre particulière de la technique de l'invention. Il est clair cependant que l'invention ne se limite pas à cette application particulière, mais peut également être mise en oeuvre dans d'autres configurations.

5.2 <u>Description d'un mode de réalisation</u>

On présente dans ce mode de réalisation, la mise en oeuvre du procédé de l'invention à une méthode dite « *Optimal-DUKPT* » en ce qu'elle a vocation à se substituer à la technique DUKPT de l'art antérieur.

L'idée de base pour améliorer le DUKPT peut être saisie de la simple manière suivante : pour la toute première opération *tc* = 1 de DUKPT, la clé $K_1$ située dans le premier registre est utilisée et effacée directement.

On note que cette clé n'a pas de fille dans la hiérarchie de clé et que sa mère est la clé IK (qui est à la distance 1 de la clé IK). Autrement dit, le serveur peut récupérer K1 de IK avec une seule application de *F*. Au lieu d'effacer K1 directement et puisque nous sommes loin d'atteindre dix itérations de *F* du coté du serveur, il est possible de dériver une autre clé de K1 et la placer dans ce premier registre. En approfondissant cette idée, les inventeurs ont eu l'idée de générer *neuf* clés supplémentaires avec le premier registre seulement.

Et ceci peut être généralisé sur les autres registres également. Tant que le premier registre contient une clé située à une distance de *dix* de la IK, elle ne peut plus être dérivée à nouveau.

Alors, il faut utiliser une clé située dans le second registre, mais avant de l'effacer de la mémoire du client, on peut en dériver deux nouvelles clés que l'on peut placer dans le premier registre puis dans le second registre.

Ces deux nouvelles clés sont a une distance *deux* de la clé IK. A nouveau, on peut dériver plusieurs clés en n'utilisant que le premier registre, mais une de moins que précédemment puisque l'on commence d'une clé a une distance *deux* (et non *un*) de la clé IK. Cette technique est au final réitérée à tous les registres.

5.2.1. Description

Dans un souci de préservation de l'échelonnage de l'algorithme, le DUKPT amélioré tel que présentement décrit est défini en tant que famille de solutions de gestion de clés. Chaque membre de la famille est identifié par la quantité R de registres de clés disponibles de la part du client et par le nombre N d'itération maximum nécessaires pour dériver une clé du serveur. Il est aisé de démontrer que chaque membre peut gérer un nombre maximum de clés

$$T = \begin{pmatrix} R + N \\ N \end{pmatrix} - 1.$$

Quant au DUKPT d'origine, on présume que la clé IK symétrique partagée a été attribuée de manière sécurisée au client et au serveur. Pour identifier la clé dérivée, pour chaque opération une chaîne publique *st*, faisant officie de structure de données selon l'invention, est transmise du client vers le serveur. Cette chaîne comprend $R$ entiers $st_i$, avec $1 \le st_i \le N$ pour $1 \le i \le R$. Un entier $st_i$ représente la distance de IK de la clé stockée dans le registre $i$ de la mémoire du client avant de traiter l'opération. Par exemple, la chaîne envoyée pour la toute première itération est 1 ... 1 1, 1 ... 1 2 pour la seconde, etc.

5.2.1.1. Du coté du client.

Le client maintient deux tables. Premièrement, les registres classiques de clé $R$, notés Ri pour $1 \le i \le R$. Ils sont simplement initialisés avec $Ri = F(IK; 0^R; i)$ et quand l'initialisation est terminée, la clé d'origine IK est effacé de la mémoire du client.
Deuxièmement, le client maintient une table $D$ d'entiers $R$ appelés $Di$, où $Di$ représente la distance entre la clé IK et la clé stockée dans le registre $Ri$. Cette distance représente le nombre d'itérations nécessaire pour obtenir la clé sotckée dans le registre $Ri$ à partir de la clé d'origine IK. Le contenu de $D$ est exactement ce qui est envoyé au serveur dans la chaîne *st*. Naturellement, il est initialisé avec $Di = 1$ pour $1 \le i \le R$.
Quand il reçoit une demande de traitement d'une nouvelle transaction, le client établi $st = D$ et recherche le registre le moins significatif ayant une distance correspondante $Di$ strictement inférieure à $N + 1$.
Ce registre, que l'on appelle $Rp$, contient la clé de transaction $K$ qui sera utilisée pour la transaction. Puis, une fois que la transaction est achevée :

- si $Dp < N$, le client met a jour les $p$ registres $Rp, Rp-1,..., R1$ avec $Ri = F(K;D; i)$ et met a jour la table des distances avec $Di = Dp + 1$ avec $1 \le i \le p$.
- Si $Dp = N$, le client efface simplement le contenu du registre $Rp$ et met a jour $Dp = Dp + 1 = N + 1$. Ce registre ne sera donc plus utilisé.

On note que dans le processus de dérivation de clé, les données utilisées en entrée de $F$ sont toujours uniques. En effet, $D$ sera différent pour chaque transaction. Cela garantit la sécurité du système. En effet, le « forward secrecy » est toujours maintenu puisque, après qu'une clé de transaction a été utilisée, il est toujours veillé à ce que cette clé et ses prédécesseurs ne soient plus présents dans la mémoire du client.
On donne un exemple de l'évolution de l'état interne des clients dans le tableau 2 ci-après.

5.2.1.2. Du coté du serveur.

Le serveur reçoit une chaîne *st* qui correspond à la table $D$ du client avant de traiter la transaction. On note que les valeurs mémorisées dans cette table de distance croient toujours du registre le plus significatif au registre le moins significatif. En outre, on rappelle que lorsque le client extrait une clé de transaction à partir d'un registre $Rp$, cela signifie que la table à distance est telle que $Di = N + 1$ pour $1 \le i \le p-1$.
On note $g_{p;v}(D)$ la transformation qui mappe la table de distance $D$ à une autre table de distance $D'$ avec :

$$\begin{cases} D'_i = N + 1, & \text{for } 1 \le i \le p - 1 \\ D'_i = v, & \text{for } i = p \\ D'_i = D_i, & \text{for } p + 1 \le i \le R \end{cases}$$

Le serveur initialise en premier une valeur locale distance $d = 1$ et une valeur de position inscrire $p = p'$, p' avec étant la position la plus significative avec $D_{P'} > 1$. Ensuite, il calcule $K = F(IK; 0^R; p')$ et ne cesse de répéter le processus suivant:

- Tant que $d < Dp - 1$, on calcule $K = F(K, g_{p,d}(D), p)$ et $d = d + 1$ ;
- Si $p=1$, alors $K = F(K, g_{p,d}(D), p)$ est la clé partagée avec le client, et la suite d'itération s'arrête ;
- Le serveur recherche la position la plus significative p' de sorte que $Dp' > Dp$. Si $Dp'$ est différent de $N + 1$, alors le serveur calcule $K = F(K; gp;d(D); p0)$ et met à jour la variable locale $p = p'$ et $d=d+1$. Sinon, $K = F(K, g_{p,d}(D), p' + 1)$ est la clé partagé avec le client et les itérations peuvent être stoppées.

Cet algorithme suit exactement le processus implicite effectué par le client pour obtenir la clé de transaction $K$ à partir de la première clé $IK$. Les procédés mis en oeuvre sur le client et le serveur sont donc les mêmes, dans leurs grandes étapes.

| iter | st sent | transaction key used and key registers update | key registers evolution | | | decision table | | |
|---|---|---|---|---|---|---|---|---|
| | | | $R_1$ | $R_2$ | $R_3$ | $T_0$ | $D_0$ | $D_1$ |
| Init | | $R_1 = F(IK, 000, 3)$ $R_2 = F(IK, 000, 2), R_3 = F(IK, 000, 1)$ | $TK_{10}$ | $TK_1$ | $TK_1$ | | | |
| 1 | 111 | $TK_1 = R_3$ $R_3 = F(TK_1, 111, 1)$ | | | $TK_2$ | | | |
| 2 | 112 | $TK_2 = R_3$ $R_3 = F(TK_2, 112, 1)$ | | | $TK_3$ | | | |
| 3 | 113 | $TK_3 = R_3$ erase $R_3$ | | | X | | | |
| 4 | 114 | $TK_4 = R_2$ $R_2 = F(TK_4, 114, 2), R_3 = F(TK_4, 114, 1)$ | | $TK_5$ | $TK_5$ | | | |
| 5 | 122 | $TK_5 = R_3$ $R_3 = F(TK_5, 122, 1)$ | | | $TK_6$ | | | |
| 6 | 123 | $TK_6 = R_3$ erase $R_3$ | | | X | | | |
| 7 | 124 | $TK_7 = R_2$ $R_2 = F(TK_7, 124, 2), R_3 = F(TK_7, 124, 1)$ | | $TK_8$ | $TK_8$ | | | |
| 8 | 133 | $TK_8 = R_3$ erase $R_3$ | | | X | | | |
| 9 | 134 | $TK_9 = R_2$ erase $R_2$ | | X | | | | |
| 10 | 144 | $TK_{10} = R_1, R_1 = F(TK_{10}, 144, 3)$ $R_2 = F(TK_{10}, 144, 2), R_3 = F(TK_{10}, 144, 1)$ | $TK_{11}$ | $TK_{11}$ | $TK_{11}$ | | | |
| 11 | 222 | $TK_{11} = R_3$ $R_3 = F(TK_{11}, 222, 1)$ | | | $TK_{12}$ | | | |
| 12 | 223 | $TK_{12} = R_3$ erase $R_3$ | | | X | | | |
| 13 | 224 | $TK_{13} = R_2$ $R_2 = F(TK_{13}, 224, 2), R_3 = F(TK_{13}, 224, 1)$ | | $TK_{14}$ | $TK_{14}$ | | | |
| 14 | 233 | $TK_{14} = R_3$ erase $R_3$ | | | X | | | |
| 15 | 234 | $TK_{15} = R_2$ erase $R_2$ | | X | | | | |
| 16 | 244 | $TK_{16} = R_1, R_1 = F(TK_{16}, 244, 3)$ $R_2 = F(TK_{16}, 244, 2), R_3 = F(TK_{16}, 244, 1)$ | $TK_{17}$ | $TK_{17}$ | $TK_{17}$ | | | |
| 17 | 333 | $TK_{17} = R_3$ erase $R_3$ | | | X | | | |
| 18 | 334 | $TK_{18} = R_2$ erase $R_2$ | | X | | | | |
| 19 | 344 | $TK_{19} = R_1$ erase $R_1$ | X | | | | | |

Table 2 : Exemple d'entrées principales et à distance l'évolution des tables sur le côté client, avec paramètres du système N = 3 et R = 3. On note $TK_i$ la clé utilisée pour l'itération i-ème. Un X\ dans les colonnes de clés registres évolution signifie que le client efface le contenu à partir de ce registre.

Dans cet exemple, supposons que le serveur reçoit st = 224. Il positionne $d=1$, $p=3$ et calculer $K = F(IK; 000; 3)$. Puis, il n'entre pas dans la boucle d'itération, ni dans la première conditionnelle si il calcule $p' = 1$ et depuis $D_p=4 =$

*N + 1*, la clé *K = F (K; 144; 2)* est la clé partagée avec le client. On donne dans le tableau 3 un exemple plus compliqué.

Table 3 : Exemple de dérivation de clé sur le côté serveur, avec les paramètres du système *N* = 8 *R* = 8 et et *st* = 12466689. La clé est déterminée avec huit itérations sur le serveur.

| iter. | key update | | local values | | |
|---|---|---|---|---|---|
| | | | $d$ | $p$ | $p'$ |
| init | $K = F(IK, 00000000, 7)$ | in | | | 7 |
| | | out | 1 | 7 | |
| 1 | $K = F(K, 11999999, 6)$ | in | 1 | 7 | 6 |
| | | out | 2 | 6 | |
| 2 | $K = F(K, 12299999, 6)$ | in | 2 | 6 | 5 |
| | $K = F(K, 12399999, 5)$ | out | 4 | 5 | |
| 3 | $K = F(K, 12449999, 5)$ | in | 4 | 5 | 2 |
| | $K = F(K, 12459999, 2)$ | out | 6 | 2 | |
| 4 | $K = F(K, 12466669, 2)$ | in | 6 | 2 | 1 |
| | $K = F(K, 12468679, 2)$ | out | | | |

5.2.1.3. Autre caractéristique

Dans au moins un mode de réalisation complémentaire de l'invention, le client ne transmet pas une structure de données *st* en tant que tel au serveur, mais une donnée spécifique qui permet au serveur de retrouver cette structure de données *st* pour, par la suite, obtenir la clé de chiffrement.
Un tel mode de réalisation permet de réduire le volume de données transmis du client vers le serveur.

5.3 Autres caractéristiques optionnelles et avantages

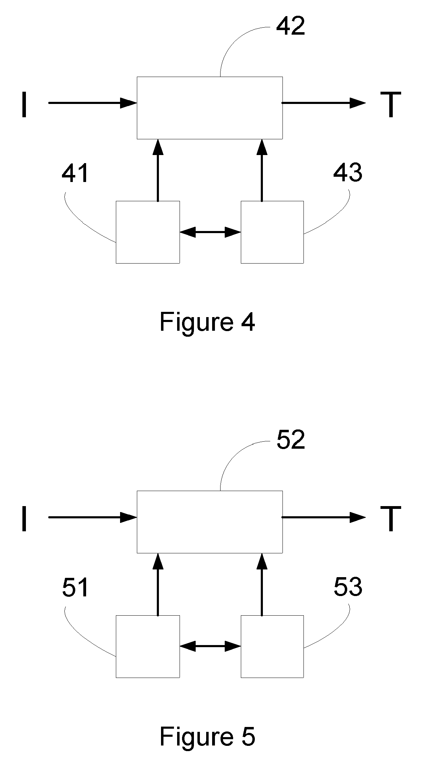

On présente, en relation avec la figure 4, un mode de réalisation d'un client comprenant des moyens de calcul des clés et des moyens de transmission de la structure de données st permettant au serveur de calculer à son tour la clé utilisée par le client.
Un tel client comprend une mémoire 41 (comprenant une mémoire sécurisée comprenant des registres *R* constituée d'une mémoire tampon, une unité de traitement 42, équipée par exemple d'un microprocesseur P, et pilotée par un programme d'ordinateur 43, mettant en oeuvre le procédé de l'invention.
A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle que le nombre d'itérations *N* du serveur. Le microprocesseur de l'unité de traitement 42 met en oeuvre les étapes du procédé décrit précédemment, selon les instructions du programme d'ordinateur 43, pour délivrer une information traitée T, telle que la structure de données *st* et les données chiffrées à l'aide de la clé *K* calculée par le terminal. Pour cela, le dispositif comprend, outre la mémoire tampon 41, des moyens de détermination d'un nombre *R* de registres disponibles au sein dudit client pour réaliser une pluralité de calcul de clés de chiffrement, des moyens de détermination d'un nombre *N* maximal d'itérations nécessaires à une obtention d'au moins une clé de chiffrement auprès dudit serveur, des moyens d'obtention d'une structure de données représentatives d'un état de calcul de clé réalisé au sein desdits *R* registres disponibles et des moyens de calcul de ladite au moins une clé de chiffrement.
Ces moyens sont pilotés par le microprocesseur de l'unité de traitement 42.
On présente, en relation avec la figure 5, un mode de réalisation d'un serveur comprenant des moyens de réception de la structure de données st et des moyens de calcul de la clé utilisée par le client.
Un tel serveur comprend une mémoire 51 (comprenant une mémoire sécurisée comprenant des registres *R* constituée d'une mémoire tampon, une unité de traitement 52, équipée par exemple d'un microprocesseur P, et pilotée par un programme d'ordinateur 53, mettant en oeuvre le procédé de l'invention.
A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une information I, telle que la structure de données *st* en provenance du client, et les données chiffrées par lui à l'aide de la clé *K.* Le microprocesseur de l'unité de traitement 42 met en oeuvre les étapes du procédé décrit précédemment, selon les instructions du programme d'ordinateur 43, pour délivrer une information traitée T, telle que la clé de chiffrement K, obtenue à partir de la structure de données *st*.

Pour cela, le dispositif comprend, outre la mémoire tampon 51, des moyens de détermination d'un nombre *R* de registres disponibles au sein dudit client pour réaliser une pluralité de calcul de clés de chiffrement, des moyens de détermination d'un nombre N maximal d'itérations nécessaires à une obtention d'au moins une clé de chiffrement, des moyens d'obtention d'une structure de données représentatives d'un état de calcul de clé réalisé au sein desdits *R* registres disponibles et des moyens de calcul de ladite au moins une clé de chiffrement *K*.

Ces moyens sont pilotés par le microprocesseur de l'unité de traitement 52.

## Revendications

1. Procédé d'obtention d'au moins une clé de chiffrement d'au moins une données transmise d'un client vers un serveur **caractérisé en ce qu'**il comprend :

   - une étape de détermination d'un nombre *R* de registres disponibles au sein dudit client pour réaliser une pluralité de calcul de clés de chiffrement ;
   - une étape de détermination d'un nombre *N* maximal d'itérations nécessaires à une obtention d'au moins une clé de chiffrement auprès dudit serveur ;
   - une étape d'obtention d'une structure de données représentatives d'un état de calcul de clé réalisé au sein desdits *R* registres disponibles ;
   - une étape calcul de ladite au moins une clé de chiffrement en fonction :

     - dudit nombre de registres disponibles *R* dudit client,
     - en effectuant au plus *N* appels à une fonction pseudo-aléatoire *F et*
     - *de ladite structure de données;*

   de sorte que ladite au moins une clé de chiffrement puisse être obtenue parmi une combinaison d'au plus $T = C_{R+N}^{N} - 1$ de clés de chiffrement à partir d'un secret préalablement partagé entre ledit serveur et ledit client.

2. Procédé selon la revendication 1, **caractérisé en ce que** le nombre R de registres disponibles et le nombre *N* maximal d'itération sont définis en fonction des contraintes du serveur et des contraintes du client et des contraintes sécuritaires.

3. Procédé selon l'une quelconque des revendications précédentes, **caractérisé en ce qu'**il comprend en outre, lorsqu'il est mis en oeuvre au sein dudit client, une étape d'émission d'une donnée représentant ladite structure de données représentatives d'un état de calcul de clé réalisé au sein desdits *R* registres disponibles, registres notés $R_R, ... R_1$.

4. Procédé selon la revendication 3, **caractérisé en ce que** ladite structure de données représentatives d'un état de calcul de clé réalisé au sein desdits *R* registres disponibles est une concaténation de *R* nombres entiers, $st = D = D_R ...D_1$ chaque entier $D_i$ représentant une distance entre ledit secret préalablement partagé entre ledit serveur et ledit client, et une clé stockée dans un registre $R_i$ dudit client, ladite distance correspondant à un nombre d'itération de ladite fonction pseudo-aléatoire *F*.

5. Procédé selon la revendication 4 **caractérisé en ce que** ledit procédé comprend :

   - une étape de détermination, en partant du registre $R_1$ jusqu'au maximum au registre $R_R$, d'une position *p* du plus petit registre $R_p$, pour lequel une distance associée $D_p$ est strictement plus petite que le nombre *N+1,* ledit registre $R_p$ comprenant une clé de chiffrement *K,* utilisée pour une transaction donnée ;
   - une étape de mise à jour de ladite structure de données comprenant :

     lorsque *Dp <N* :

       ◦ une étape de mise à jour des p-1 registres $R_p ...R_1$ de en calculant à partir de ladite clé de registre K, de ladite fonction pseudo aléatoire F, de ladite structure de données D et d'un nombre entier i, tel que $R_i=F(K, D, i)$ pour 1 <= i<= p ;

∘ une étape de mise à jour ladite structure de données de sorte que $D_i = Dp+1$ avec $1 <= i <= p$ ;

lorsque $D_p = N$, une étape d'effacement du contenu dudit registre $R_p$ et
une étape de mise à jour du nombre $D_p = D_p+1 = N+1$.

6. Procédé selon l'une quelconque des revendications 1 ou 2, **caractérisé en ce que**, lorsqu'il est mis en oeuvre au sein dudit serveur, ladite étape d'obtention comprend :

- une étape de réception d'une donnée représentant ladite structure de données représentatives d'un état de calcul de clé réalisé au sein desdits $R$ registres disponibles ;
- une étape de lecture de ladite donnée reçue délivrant ladite structure de données représentatives ;
- une étape de calcul de ladite structure de données représentatives d'un état de calcul de clé réalisé au sein desdits $R$ registres disponibles lorsque ladite structure de données représentatives n'est pas directement lue dans ladite donnée reçue.

7. Procédé selon la revendication 6, **caractérisé en ce que** ladite structure de données est définie comme étant une concaténation de $R$ nombres entiers: $st = D = D_R ... D_1$ où chaque nombre entier $D_i$ représente une distance entre ledit secret préalablement partagé entre ledit serveur et ledit client, et une clé stockée dans un registre $R_i$ dudit client, et **en ce que** l'étape de calcul de ladite au moins une clé de chiffrement comprend:

- une étape d'initialisation d'une distance locale $d$ à $1$ et une position de registre $p$ telle que $p = p'$, avec $p'$ un nombre correspondant à la position de poids fort, en partant du registre $R_R$ jusqu'au registre $R_1$, tel que $D_{p'} > 1$;
- une première étape de calcul pour obtenir une clé $K = F(secret\ préalablement\ partagé, 0^R, p')$ où $0^R$ correspond à $R$ fois $0$,
- et au moins une itération :

  • d'un calcul pour obtenir une clé $K = F(K, g_{p,d}(D), p)$ où $g_{p,v}(D) = D'_R ... D'_1$ pour laquelle $D'_i = N+1$ si $i$ est compris entre $1$ et $p-1$, $D'_i = d$ si $i=p$ et $D'_i = D_i$ si $i$ est compris entre $p+1$ et $R$ et d'une étape pour mettre à jour la variable $d$ tel que $d = d+1$ tant que la condition suivante est vérifiée : $d < D_p - 1$;
  • si le nombre $p = 1$, une étape de calcul consistant à obtenir une clé $K = F(K, g_{p,d}(D), p)$ correspondant alors à la clé partagée temporairement avec le client et arrêter l'itération des étapes;
  • déterminer une position $p'$ telle que $D_{p'} > D_p$ ;
  • Si $D_{p'} ! = N+1$, une étape consistant à calculer une clé $K = F(K, g_{p,d}(D), p')$ et une étape de mise à jour des variables $p = p'$ et $d=d+1$.
  • Sinon, effectuer une étape consistant à calculer une clé $K = F(K, g_{p,d}(D), p'+1)$ correspondant alors à la clé partagée temporairement avec le client et arrêter l'itération d'étapes.

8. Dispositif d'obtention d'au moins une clé de chiffrement d'au moins une données transmise d'un client vers un serveur **caractérisé en ce qu'**il comprend :

- des moyens de détermination d'un nombre $R$ de registres disponibles au sein dudit client pour réaliser une pluralité de calcul de clés de chiffrement ;
- des moyens de détermination d'un nombre $N$ maximal d'itérations nécessaires à une obtention d'au moins une clé de chiffrement auprès dudit serveur ;
- des moyens d'obtention d'une structure de données représentatives d'un état de calcul de clé réalisé au sein desdits R registres disponibles ;
- des moyens de calcul de ladite au moins une clé de chiffrement en fonction :

  - dudit nombre de registres disponibles $R$ dudit client,
  - en effectuant au plus $N$ appels à une fonction pseudo-aléatoire $F$ et
  - de ladite structure de données ;

de sorte que ladite au moins une clé de chiffrement puisse être obtenue parmi une combinaison d'au plus $T = C_{R+N}^N - 1$ de clés de chiffrement à partir d'un secret préalablement partagé entre ledit serveur et ledit client.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé d'obtention selon l'une au moins des revendications 1 à 7, lorsqu'il est exécuté sur un ordinateur.

**Patentansprüche**

1. Verfahren zum Erhalt mindestens eines Schlüssels zur Verschlüsslung mindestens eines Datums, der von einem Client zu einem Server übertragen wird, **dadurch gekennzeichnet, dass** es umfasst:

   - einen Schritt der Bestimmung einer Anzahl R von innerhalb des Clients verfügbaren Registern, um eine Vielzahl von Berechnungen von Verschlüsselungsschlüsseln durchzuführen;
   - einen Schritt der Bestimmung der maximalen Anzahl N von notwendigen Iterationen für den Erhalt mindestens eines Verschlüsselungsschlüssels beim Server;
   - einen Schritt des Erhalts einer Struktur von Daten, die für einen Zustand der Berechnung eines Schlüssels, die innerhalb der R verfügbaren Register durchgeführt wird, repräsentativ sind;
   - einen Schritt der Berechnung des mindestens einen Verschlüsselungsschlüssels in Abhängigkeit:

     - von der Anzahl von verfügbaren Registern R des Clients,
     - wobei höchstens N Anrufe an eine pseudozufällige Funktion F durchgeführt werden, und
     - der Datenstruktur;

   so dass der mindestens eine Verschlüsselungsschlüssel unter einer Kombination von höchstens $T = C^N_{R+N}-1$ Verschlüsselungsschlüsseln aus einem vorher zwischen dem Server und dem Client geteilten Geheimnis erhalten werden kann.

2. Verfahren nach Anspruch 1, **dadurch gekennzeichnet, dass** die Anzahl R von verfügbaren Registern und die Maximalzahl N von Iterationen in Abhängigkeit von den Anforderungen des Servers und den Anforderungen des Clients und den Sicherheitsanforderungen definiert sind.

3. Verfahren nach einem der vorhergehenden Ansprüche, **dadurch gekennzeichnet, dass** es ferner, wenn es innerhalb des Clients eingesetzt wird, einen Schritt des Sendens eines Datums umfasst, das die Struktur von Daten darstellt, die für einen Zustand der Berechnung des Schlüssels, die innerhalb der R verfügbaren Register durchgeführt wird, repräsentativ sind, wobei die Register mit $R_R, ... R_1$ bezeichnet sind.

4. Verfahren nach Anspruch 3, **dadurch gekennzeichnet, dass** die Struktur von Daten, die für einen Zustand der Berechnung des Schlüssels, die innerhalb der R verfügbaren Register durchgeführt wird, repräsentativ sind, eine Aneinanderreihung von R ganzen Zahlen ist, st $= D = D_R ... D_1$, wobei $D_i$ eine Distanz zwischen dem vorher zwischen dem Server und dem Client geteilten Geheimnis und einem im einem Register $R_i$ des Client gespeicherten Schlüssel darstellt, wobei die Distanz einer Iterationszahl der pseudo-zufälligen Funktion F entspricht.

5. Verfahren nach Anspruch 4, **dadurch gekennzeichnet, dass** das Verfahren umfasst:

   - einen Schritt der Bestimmung, ausgehend von dem Register $R_1$ bis maximal zum Register $R_R$, einer Position p des kleinsten Registers $R_p$, bei dem eine zugehörige Distanz $D_p$ unbedingt kleiner als die Anzahl N+1 ist, wobei das Register $R_p$ einen Verschlüsselungsschlüssel K umfasst, der für eine gegebene Transaktion verwendet wird;
   - einen Schritt der Aktualisierung der Datenstruktur, umfassend:

     wenn Dp<N:

       * einen Schritt der Aktualisierung der p-1 Register $R_p ... R_1$, wobei auf Basis des Registerschlüssels K der pseudo-zufälligen Funktion F, der Datenstruktur D und eine ganzen Zahl i berechnet wird, so dass $R_i=F(k,D,k)$ für $1 \leq i \leq p$;
       * einen Schritt der Aktualisierung der Datenstruktur, so dass $D_i=D_p+1$ mit $1 \leq i \leq p$;

   wenn $D_p=N$, einen Schritt des Löschens des Inhalts aus dem Register $R_p$ und einen Schritt der Aktualisierung der Anzahl $D_p=D_p+1=N+1$.

6. Verfahren nach einem der Ansprüche 1 oder 2, **dadurch gekennzeichnet, dass**, wenn es innerhalb des Servers eingesetzt wird, der Schritt des Erhaltens umfasst:

- einen Schritt des Empfangens eines Datums, das die Struktur von Daten darstellt, die für einen Zustand der Berechnung eines Schlüssels, die innerhalb der R verfügbaren Register durchgeführt wird, repräsentativ sind;
- einen Schritt des Lesens des empfangenen Datums, der die Struktur von repräsentativen Daten liefert;
- einen Schritt der Berechnung der Struktur von Daten, die für einen Zustand der Berechnung eines Schlüssels, die innerhalb der R verfügbaren Register R durchgeführt wird, repräsentativ sind, wenn die Struktur von repräsentativen Daten nicht direkt in dem empfangenen Datum gelesen wird.

7. Verfahren nach Anspruch 6, **dadurch gekennzeichnet, dass** die Datenstruktur als eine Aneinanderreihung von R ganzen Zahlen definiert ist, $st = D = D_R ... D_1$, wobei jede ganze Zahl $D_i$ eine Distanz zwischen dem vorher zwischen dem Server und dem Client geteilten Geheimnis und einem im einem Register $R_i$ des Client gespeicherten Schlüssel darstellt, und dass der Schritt der Berechnung des mindestens einen Verschlüsselungsschlüssels umfasst:

- einen Schritt der Initialisierung einer lokalen Distanz d bis 1 und einer Registerposition p, so dass p = p', wobei p' eine Zahl entsprechend der starken Position ist, ausgehend vom Register $R_R$ bis zum Register $R_1$, so dass $D_{p'} > 1$;
- einen ersten Berechnungsschritt, um einen Schlüssel K = F(vorher geteiltes Geheimnis, $O^R$, p'), wobei $O^R$ R mal 0 entspricht,
- und mindestens eine Iteration:

* einer Rechnung, um einen Schlüssel $K = F(K, g_{p,d}(D), p)$ zu erhalten, wobei $g_{p,v}(D) = D'_R ... D'_1$, wobei $D'_i = N+1$, wenn i zwischen 1 und p-1 liegt, und $D'_i = d$, wenn i=p und $D'_i = D_i$, wenn i zwischen p+1 und R liegt, und eines Schritts zur Aktualisierung der Variablen d, so dass d=d+1, solange die folgende Bedingung überprüft wird: $d < D_p - 1$;
* wenn die Zahl p=1, einen Berechnungsschritt, der darin besteht, einen Schlüssel $K = F(K, g_{p,d}(D), p)$ erhalten, der nun dem vorübergehend mit dem Client geteilten Schlüssel entspricht, und die Iteration der Schritte einzustellen;
* eine Position p' zu bestimmen, so dass $D_{p'} > D_p$;
* wenn $D_{p'} != N+1$, einen Schritt der darin besteht, einen Schlüssel $K = F(K, g_{p,d}(D), p'$ zu berechnen, und einen Schritt der Aktualisierung der Variablen p=p' und d=d+1,
* andernfalls Durchführung eines Schrittes, der darin besteht, einen Schlüssel $K = F(K, g_{p,d}(D), p'+1)$ zu berechnen, der nun dem vorübergehend mit dem Client geteilten Schlüssel entspricht, und die Iteration von Schritten einzustellen.

8. Vorrichtung zum Erhalt eines Schlüssels zur Verschlüsslung mindestens eines Datums, der von einem Client zu einem Server übertragen wird, **dadurch gekennzeichnet, dass** es umfasst:

- Mittel zur Bestimmung einer Anzahl R von innerhalb des Clients verfügbaren Registern, um eine Vielzahl von Berechnungen von Verschlüsselungsschlüsseln durchzuführen;
- Mittel zur Bestimmung der maximalen Anzahl N von notwendigen Iterationen für den Erhalt mindestens eines Verschlüsselungsschlüssels beim Server;
- Mittel zum Erhalt einer Struktur von Daten, die für einen Zustand der Berechnung eines Schlüssels, die innerhalb der R verfügbaren Register durchgeführt wird, repräsentativ sind;
- Mittel zur Berechnung des mindestens einen Verschlüsselungsschlüssels in Abhängigkeit:

- von der Anzahl von verfügbaren Registern R des Clients,
- wobei höchstens N Anrufe an eine pseudozufällige Funktion F durchgeführt werden, und
- der Datenstruktur;

so dass der mindestens eine Verschlüsselungsschlüssel unter einer Kombination von höchstens $T = C^N_{R+N} - 1$ Verschlüsselungsschlüsseln aus einem vorher zwischen dem Server und dem Client geteilten Geheimnis erhalten werden kann.

9. Computerprogrammprodukt, das von einem Kommunikationsnetz fernladbar und/oder auf einem vom Computer lesbaren Träger gespeichert und/oder von einem Mikroprozessor ausführbar ist, **dadurch gekennzeichnet, dass** es Programmcodeinstruktionen für die Ausführung des Verfahrens zum Erhalt von Schlüsseln nach mindestens einem der Ansprüche 1 bis 7, wenn es auf einem Computer ausgeführt wird, umfasst.

**Claims**

1. Method for obtaining at least one key for encrypting at least one piece of data transmitted from a client to a server, **characterised in that** it comprises:

   - a step of determining a number $R$ of registers available within said client to carry out a plurality of computations of encryption keys;
   - a step of determining a maximum number $N$ of iterations needed to obtain at least one encryption key from said server;
   - a step of obtaining a structure of data pieces representative of a key computation state achieved within said $R$ available registers;
   - a step of computing said at least one encryption key as a function of:

     - said number of $R$ available registers of said client,
     - in performing at most $N$ calls to a pseudo-random function $F$ *and*
     - *of said structure of data pieces;*

   so that said at least one encryption key can be obtained from a combination of at most $T = C^N_{R+N}$ -1 encryption keys on a basis of a secret preliminarily shared between said server and said client.

2. Method according to Claim 1, **characterised in that** the number $R$ of available registers and the maximum number $N$ of iterations are defined as a function of constraints of the server and constraints of the client and security constraints.

3. Method according to Claim 1, **characterised in that** it further comprises, when implemented within said client, a step of sending a piece of data representing said structure of data pieces representative of a key computation state achieved within said $R$ available registers, registers denoted as $R_{R'}...R_1$.

4. Method according to Claim 3, **characterised in that** said structure of data pieces representative of a key computation state achieved within said $R$ available registers is a concatenation of $R$ integers, $st = D = D_R ...D_1$ each integer $D_i$ representing a distance between said secret preliminarily shared between said server and said client and a key stored in a register $R_i$ of said client, said distance corresponding to a number of iterations of said pseudo-random function $F$.

5. Method according to Claim 4, **characterised in that** said method comprises:

   - a step of determining, starting from the register $R_1$ up to a maximum at the register $R_R$, a position $p$ of the smallest register $R_p$, for which an associated distance $D_p$ is strictly smaller than the number $N+1$, said register $R_p$ comprising an encryption key $K$, used for a given transaction;
   - a step of updating said structure of data pieces comprising:

     when $D_p < N$:

       o a step of updating the p-1 registers $R_p ...R_1$ by computing them on the basis of said register key K, said pseudo-random function F, said data structure D and an integer i, such that $R_i = F(K, D, i)$ for 1 <= i <= p;
       o a step of updating said data structure so that $D_i = D_p + 1$ with 1 <= i <= p;

     when $D_p = N$, a step of erasing the content of said register $R_p$ and a step of updating the number $D_p = D_p + 1 = N + 1$.

6. Method according to any one of Claims 1 or 2, **characterised in that** when it is implemented within said server, said obtaining step comprises:

   - a step of receiving a piece of data representing said structure of data pieces representative of a key computation state performed within said $R$ available registers;
- a step of reading said received piece of data delivering said structure of representative data pieces;
- a step of computing said structure of data pieces representative of a key computation state achieved within said $R$ available registers when said structure of representative data pieces is not directly read in said data received.

7. Method according to Claim 6, **characterised in that** said structure of data pieces is defined as being a concatenation of $R$ integers: $st = D = D_R \ldots D_1$ where each integer $D_i$ represents a distance between said secret preliminarily shared between said server and said client, and a key stored in a register $R_i$ of said client and **in that** the step of computing said at least one encryption key comprises:

- a step of initializing a local distance $d$ at 1 and a register position $p$ such that $p=p'$, with $p'$ being a number corresponding to the most significant position, starting from the register $R_R$ up to the register $R_1$, such that $D_{p'} > 1$;
- a first step of computation to obtain a key $K=F$ (*preliminarily shared secret*, $0^R$, $p'$) *where $O^R$ corresponds to $R$ times O,*
- and at least one iteration:

  • of a computation to obtain a key $K = F(K, g_{p,d}(D), p)$ *where* $g_{p,v}(D) = D'_R \ldots D'_1$ for which $D'_i = N+1$ if i ranges from 1 and $p-1$, $D'_i = d$ si $i=p$ and $D'_i= D_i$, if i ranges from $p+1$ and $R$ and a step for updating the variable d such that d = d+1 so long as the following condition is verified: $d < D_p -1$;
  • if the number p=1, a computation step consisting of obtaining a key $K = F(K, g_{p,d}(D), p)$ corresponding then to the key temporarily shared with the client and stopping the iteration of the steps;
  • determining a position $p'$ such that $Dp' > D_p$;
  • if $D_{p'}$ ! = N+1, a step of computing a key $K = F(K, g_{p,d}(D), p')$ and a step of updating the variables $p = p'$ and $d=d+1$;
  • If not, performing a step consisting of computing a key $K = F(K, g_{p,d}(D), p'+1)$ then corresponding to the key shared temporarily with the client and stopping the iteration of the steps.

8. Device for obtaining at least one key for encrypting at least one piece of data transmitted from a client towards a server, **characterised in that** it comprises:

- means for determining a number $R$ of registers available within said client to carry out a plurality of computations of encryption keys;
- means for determining a maximum number $N$ of iterations needed to obtain at least one encryption key from said server;
- means for obtaining a structure of data pieces representative of a key computation state achieved within said $R$ available registers;
- means for computing said at least one encryption key as a function of:

  - said number of $R$ available registers of said client,
  - in performing at most N calls to a pseudo-random function $F$, *and*
  - of said structure of data pieces;

so that said at least one encryption key can be obtained from a combination of at most $T = C^N_{R+N} -1$ encryption keys on a basis of a secret preliminarily shared between said server and said client.

9. Computer program product downloadable from a communications network and/or stored on a machine-readable medium and/or executable by a microprocessor, **characterised in that** it comprises program code instructions for implementing the method of obtaining according to at least one of Claims 1 to 7, when it is executed on a computer.

Figure 1

Figure 2

Figure 3

42

I →  [  ]  → T

41                43

Figure 4

52

I →  [  ]  → T

51                53

Figure 5